# EUROPÄISCHE PATENTANMELDUNG

(11) **EP 2 270 426 A1**
(43) Veröffentlichungstag der Anmeldung: **05.01.2011**
(21) Anmeldenummer: 10161485.7
(22) Anmeldetag: 29.04.2010
(51) Int. Cl.: G01C 9/10, H01H 35/02, H01H 35/14

(54) **Vorrichtung und Verfahren zur Überwachung der Bewegung eines Gegenstands**

(30) Priorität: 30.06.2009 DE 102009031300
(71) Anmelder: Deutsche Post AG, 53113 Bonn (DE)
(72) Erfinder: Gorldt, Christian, 28359, Bremen (DE); Franck, Hermann, 27721, Ritterhude (DE); Beesner, Ralf, 28357, Bremen (DE)
(74) Vertreter: Jostarndt, Hans-Dieter

(57) **Zusammenfassung**

Die vorliegende Erfindung bezieht sich auf eine Vorrichtung und ein Verfahren zur Überwachung der Bewegung eines Gegenstands mittels einer Anordnung von mindestens drei kreisförmig angeordneten Sensoreinheiten wie Neigungswinkelschaltern oder Beschleunigungssensoren in Verbindung mit einer Auswerteelektronik, wobei Auswerteelektronik für die Signale des Neigungswinkelschalters beispielsweise aus einem NAND Gatter besteht, das bei kurzen Erschütterungen oder bei Schräglage des Sensors ein Ruhezustand zeigt und bei mehrfachen Erschütterungen in Folge von Bewegung einen Bewegungszustand anzeigt.

## Beschreibung

Die Erfindung betrifft eine Vorrichtung und ein Verfahren zur Überwachung der Bewegung eines Gegenstands. Insbesondere kann es sich hierbei um elektrische Bewegungssensoren und Rüttelsensoren zur Aufnahme von andauernden Bewegungsänderungen mit geringem Energieverbrauch für die Anwendung im Logistikbereich und im Frachtumschlag handeln, wobei Telematikeinheiten eingesetzt werden.

Im Bereich der Telematiklösungen sind Ortungsgeräte, Trackinganwendungen und Fernalarme bekannt, die anfangs in Fahrzeugen eingesetzt wurden. Aufgrund des recht hohen Strombedarfs solcher Lösungen war lange Zeit ein Einsatz solcher Telematiklösungen nur in Fahrzeugen möglich, die eine zentrale Spannungsversorgung aufwiesen. Aufgrund des technischen Fortschrittes und der Miniaturisierung von elektronischen Bauteilen und damit einhergehend sinkender Kosten für Telematikeinrichtungen wurde auch der autarke Einsatz von Telematikvorrichtungen attraktiv. Die Stromversorgung für autarke Telemetrieeinrichtungen wird beispielsweise durch Batterien, Solarzellen oder Akkus gewährleistet. Unter solchen Voraussetzungen ist es wichtig, dass die Vorrichtungen die zur Verfügung stehende Energie möglichst sparsam einsetzen.

Gerade im Bereich des Nachverfolgens von Frachtgütern ist es möglich, während langer Standzeiten die Telematikeinheit in einen so genannten "Tiefschlafmodus" zu versetzen. Das bedeutet, dass während langer Standzeiten die Telematikeinheit lediglich die Sensoren zyklisch aktiviert, die eine Zustandsänderung oder Lageänderung erkennen, und andere Einheiten ausgeschaltet bleiben. Erst wenn eine Lageänderung eintritt, werden sämtliche Einheiten der Telematikeinheit aktiviert und Telemetriedaten übermittelt.

Es ist somit hinreichend, die Telematikeinheit lediglich zu festen Zeitpunkten oder bei Detektion einer Bewegung mittels eines Bewegungssensors zu aktivieren. Die vorliegende Erfindung stellt hierfür einen einfachen Bewegungssensor mit niedrigem Energiebedarf vor.

Aus dem Stand der Technik sind mechanische Neigungswinkelschalter bekannt, wie sie beispielsweise in Alarmanlagen für Motorräder eingesetzt werden. Diese Schalter sind darauf eingerichtet anzuzeigen, ob ein Zweiradfahrzeug aus einer aufrechten Lage heraus geneigt wird. Jedoch ist die Empfindlichkeit dieser mechanischen Neigungswinkelschalter begrenzt, so sind diese beispielsweise nicht in der Lage, Beschleunigungen oder Verzögerungen, wie sie im Fahrbetrieb auftreten, sicher zu erkennen. Halbleiterbeschleunigungssensoren sind genauer in der Aufnahme von Neigungswinkeln, liefern jedoch einen stetigen Datenstrom von Messwerten über einen seriellen Busanschluss (SPI oder I²C). Aufgrund der großen anfallenden Datenmengen können diese Messwerte nur aufwendig mit einer Mikroprozessorschaltung ausgelesen werden. Zudem benötigen sie eine komplizierte Interpretation, um in ein einfaches Schaltkriterium umgesetzt zu werden.

Mechanische Neigungswinkelschalter bestehen beispielsweise aus einer Metallkugel, welche wahlweise durch Bewegung in einem Gehäuse einen elektrischen Kontakt öffnet oder schließt. Aufgrund des mechanischen Aufbaues sind Neigungswinkelschalter für viele Anwendungen zu unempfindlich oder bieten nicht die notwendige Zuverlässigkeit. Halbleiter-Beschleunigungssensoren werden vor allen Dingen dann eingesetzt, wenn bereits eine Mikroprozessorsteuerung vorhanden ist, denn sie erfordern eine aufwendige Datenverarbeitung. Gegebenenfalls bedarf es auch einer für den entsprechenden Mikroprozessortyp spezifischen Programmierung.

Deshalb ist es Aufgabe der vorliegenden Erfindung, die Empfindlichkeit und Zuverlässigkeit bekannter Vorrichtungen zur Überwachung der Bewegung eines Gegenstands zu verbessern.

Diese Aufgabe wird durch eine Vorrichtung und ein zugehöriges Verfahren gemäß den Patentansprüchen 1 und 9 gelöst. Vorteilhafte Weiterbildungen der Erfindung sind in den abhängen Ansprüchen 2-8 und 10-14 definiert.

Gemäß der Erfindung wird eine Vorrichtung zur Überwachung der Bewegung eines Gegenstands geschaffen. Diese umfasst eine Anordnung von mindestens drei kreisförmig angeordneten Sensoreinheiten in Verbindung mit einer Auswerteelektronik, wobei die Sensoreinheiten jeweils Erfassungsmittel zur Erfassung der Bewegung des Gegenstands und Mittel zur Weiterleitung eines Signals an die Auswerteelektronik aufweisen, und die Auswerteelektronik Ausgabemittel zum Ausgeben eines ersten und zweiten Signals aufweist.

Vorteilhaft bei einer derartigen Vorrichtung ist, dass die kreisförmig angeordneten Sensoreinheiten in der Lage sind, Bewegungen in verschiedenen Richtungen oder Ebenen aufzunehmen, wobei die Sensoreinheit jeder Sensor sein kann, der geeignet ist, Bewegungen oder Beschleunigungen aufzunehmen. Die Auswerteelektronik kann auch in einer Sensoreinheit integriert sein.

In einer anderen Ausführungsform weist die Anordnung vier kreisförmig angeordnete Sensoreinheiten auf, wobei jeweils zwei sich gegenüberliegende Sensoreinheiten für eine Bewegungsrichtung oder Bewegungsebene vorgesehen sind. Dabei können die Sensoreinheiten in einer Ebene angeordnet sein, so dass sich eine Redundanz ergibt zwischen zwei gegenüberliegenden Sensoreinheiten in Bezug auf die Bewegungen einer Bewegungsrichtung. Ferner können die Sensoreinheiten räumlich angeordnet sein, beispielsweise kugelförmig. Die Sensoreinheiten können in einem Neigungswinkel zueinander angeordnet sein und nicht exakt gegenüberliegend, um die Bewegungen einer Raumrichtung gezielter zu erfassen.

In einer weiteren Ausführungsform sieht die Erfindung die Anordnung von kreisförmig angeordneten Sensoreinheiten und die Auswerteelektronik in einem Gehäuse vereint vor, welches an dem zu überwachenden Gegenstand anbringbar ist. Bei dem zu überwachenden Gegenstand handelt es sich beispielsweise um einen Frachtcontainer bzw. eine Wechselbrücke. Das Gehäuse mit der erfindungsgemäßen Vorrichtung kann fest oder lösbar mit dem Frachtcontainer verbunden werden, wobei es ferner im Inneren des Frachtcontainers oder an dessen Außenseite angebracht sein kann.

Weiterhin sieht eine Ausführungsform vor, dass die Sensoreinheiten entweder einen Neigungswinkelschalter und/oder einen Halbleiter-Beschleunigungssensor einschließen. Je nach Ausführungsform und Anforderungen an die Robustheit bzw. Effizienz oder Genauigkeit ist es vorteilhaft, eine der beiden Möglichkeiten oder einen anderen bewegungsaufnehmenden Sensor als Sensoreinheit zu verwenden. Vorteilhaft bei Neigungswinkelschaltern ist, dass sie in ihrer Ausführungsform robust und auch bei extremen Temperaturen oder Feuchtigkeitswerten zuverlässig einsetzbar sind. Neigungswinkelsensoren sind jedoch gegenüber Halbleiter-Beschleunigungssensoren relativ ungenau. Erfindungsgemäß kann durch die besondere Anordnung der Neigungswinkelsensoren in kreis- oder kugelförmiger Weise oder durch die Anordnung von mehreren Neigungswinkelschaltern, gestaffelt in verschiedene Inklinationen, dieser Nachteil aufgewogen werden.

Ferner ist es möglich, durch die vorliegende Erfindung auch mit einfachen Neigungswinkelschaltern, welche als Rollkugelschalter ausgeführt wird, festzustellen, ob ein Behälter bewegt wird oder lediglich schräg angeordnet ist oder einfach durch ein Anstoßen erschüttert wurde.

In einer weiteren bevorzugten Ausführungsform ist eine Auswerteelektronik vorgesehen, welche wenigstens einen Kondensator aufweist, welcher Übertragungsmittel zur Weiterleitung eines Signals an ein NAND-Gatter aufweist, welches durch das Kondensatorsignal schaltbar ist.

Durch die Übertragungseigenschaften des Kondensators wird verhindert, dass ein dauernd geschlossener Rollkugelschalter durch die Gabe eines Dauersignals an dem NAND-Gatter, die Schaltung dauernd ansprechen lässt und somit die Auswertung des NAND-Gatter Signals blockiert wird

In einer weiteren Ausgestaltung ist es möglich, eine einmalige Erschütterung von einer mehrmaligen Erschütterung zu unterscheiden. Wird der Kondensator lediglich einmalig geladen, wird dadurch das NAND-Gatter nicht geschaltet. Bei mehrmaliger Ladung des Kondensators allerdings wird durch das Übertragungsmittel der Zustand des NAND-Gatters umgeschaltet, was dazu führt, dass das Ausgabemittel der Auswerteelektronik einen Signalwechsel vornimmt.

In einer weiteren Ausführungsform ist die Vorrichtung an einem Wechselbehälter, Container oder Fahrzeug angebracht und steht in Verbindung mit einer Telematikeinheit. Durch die einfache und kosteneffiziente Ausführung der vorliegenden Erfindung, beispielsweise in Form von einer Neigungswinkelschalter-Ausführung, ist es möglich, einfache mit einer Telematikeinheit in Verbindung stehende Vorrichtungen herzustellen. Eine effiziente Überwachung von Wechselbehältern ist damit möglich. Aufgrund der Vorteile der vorliegenden Erfindung ist es denkbar, Einwegsensoren in Verbindung mit der Telematikeinheit herzustellen, so dass es nicht notwendig ist, die Vorrichtung nach dem Verladen der Wechselbehälter wieder zu entfernen.

Weiterhin sieht eine Ausführungsform der Erfindung eine Vorrichtung vor mit Mitteln zur Aktivierung der Telematikeinheit in Abhängigkeit vom ersten und zweiten Signal der Auswerteelektronik.

Gerade bei Containern oder Wechselbehältern, die auf einem Lagerplatz abstellt sind, können sehr lange Standzeiten auftreten. Mithilfe der vorliegenden Erfindung ist es vorteilhaft möglich, die Telematikeinheit und den Sensor in einem Tiefschlafmodus zu betreiben. Erst wenn eine Bewegung sicher festgestellt wird, wird die Telematikeinheit eingeschaltet, wodurch sowohl eine effektive Nachrichtenübertragung als auch eine erhöhte Energieeffizienz der Batterie betriebenen Telematikeinheiten bewirkt wird.

In einer weiteren Ausführungsform ist es möglich, dass aufgrund der hohen Energieeffizienz bereits die Bewegung des Containers ausreicht, um die Telematikeinheit und die Auswerteelektronik mit elektrischer Energie zu versorgen, um damit ein Signal weiterzuleiten.

Ferner weist die Erfindung eine Telematikeinheit auf, welche zusätzliche Mittel zur Aktivierung der Telematikeinheit in vorgegebenen Zeitintervallen vorsieht.

In einer weiteren Ausführungsform sieht die vorliegende Erfindung ein Verfahren zur Anwendung der Vorrichtung zur Überwachung der Bewegung eines Gegenstandes vor. Die Erfassungsmittel der wenigstens drei kreisförmig angeordneten Sensoreinheiten der Vorrichtung generieren bei Bewegung des Gegenstandes ein Signal und/oder schließen einen Kontakt, wobei die Auswerteelektronik dieses Signal und/oder das Schließen eines Kontaktes innerhalb einer Zeitperiode auswertet und daraufhin ein erstes und zweites Signal ausgibt.

Ferner sieht die Erfindung Erfassungsmittel der Sensoreinheiten vor, die die Bewegung des zu überwachenden Gegenstandes in eine Richtung oder in einer Ebene und/oder die Rotation um eine Achse erfassen. Damit ist es auch möglich, Bewegungen von Containern, welche an Kränen aufgehängt werden, zu überwachen, indem Erfassungsmittel geeignet an dem Gegenstand angeordnet werden.

In einer weiteren Ausführungsform sieht das Verfahren vor, dass eine einfache Erschütterung innerhalb einer Zeitperiode den Ladezustand des Kondensators der Vorrichtung einmalig ändert, und bei mehrfacher Erschütterung innerhalb einer Zeitperiode der Ladezustand des Kondensators der Vorrichtung mehrmalig geändert wird, wobei ein NAND-Gitter das einmalige und mehrmalige Entladen mittels einer Entscheidungsschwelle durch Abtastung erkennt und ein erstes Signal zur Erkennung eines Ruhezustandes und ein zweites Signal zur Erkennung eines Bewegungszustandes ausgibt. Damit ist vorteilhaft sichergestellt, dass eine Neigung oder eine einfache Erschütterung des Gegenstandes von einer mehrfachen Erschütterung oder einem Transportvorgang des Gegenstandes unterschieden werden kann. Ferner weist das Verfahren vorteilhaft auf, dass die Entscheidungsschwelle der Vorrichtung eingestellt werden kann, um so unterschiedliche Arten von Bewegungen zu unterscheiden.

Ferner vorteilhaft sieht die Erfindung vor, dass die Auswerteelektronik bei der einfachen Erschütterung innerhalb einer Zeitperiode ein erstes Signal zur Erkennung eines Ruhezustandes und bei mehrfacher Erschütterung innerhalb einer Zeitperiode ein zweites Signal zur Erkennung des Bewegungszustandes ausgibt.

In einer weiteren Ausführungsform sieht das Verfahren vor, dass die Telematikeinheit an dem zu überwachenden Gegenstand in Abhängigkeit von dem ersten oder zweiten Signal der Auswerteelektronik oder zusätzlich auch in vorgegebenen Zeitintervallen aktiviert wird.

Die Erfindung wird im Folgenden beispielhaft anhand der Figuren näher beschrieben.

Es zeigen:
- Figur 1: eine Prinzipanordnung eines Neigungswinkelschalters zur Positions- bestimmung mit einer Kugel;
- Figur 2: eine prinzipielle Anordnung von Neigungswinkelschaltern in kreuzweiser Anordnung; und
- Figur 3: das Schaltbild einer Anordnung von vier Sensoreinheiten und einem NAN D-Gatter.

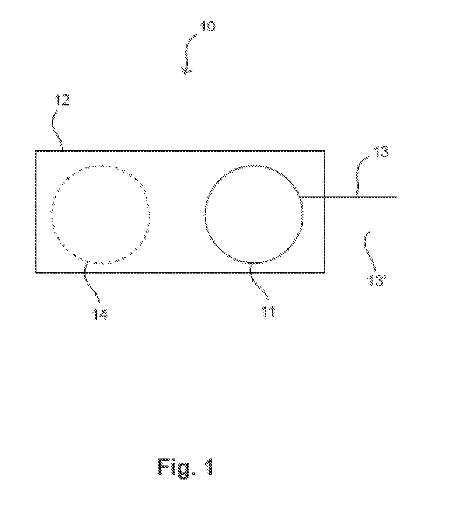

Figur 1 zeigt den prinzipiellen Aufbau eines Neigungswinkelschalters 10 zur Positionsbestimmung mit einer Kugel 11. Der Neigungswinkelschalter 10 weist ein Kunststoffgehäuse 12 auf, in dessen Inneren eine metallische Kugel 11 derartig angeordnet ist, dass sie zwischen zwei Positionen je nach Neigung des Sensors hin- und herrollen kann. Der Boden des Neigungswinkelschalters 10 ist aus Kunststoff, und in einer Hälfte befinden sind metallische Kontakte 13 und 13', die durch das Aufliegen der Kugel 11 elektrisch geschlossen werden. Die in der Figur 1 durch einen durchgezogenen Kreis symbolisierte Kugel 11 zeigt den Kontakt im geschlossenen Zustand, der gestrichelt dargestellte Kreis 14 bezeichnet die Lage der Kugel im Zustand eines geöffneten Kontaktes.

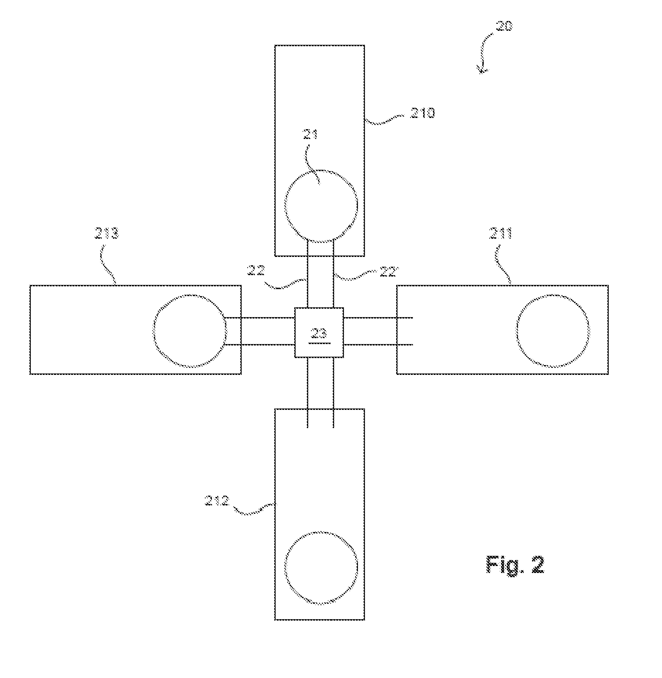

Figur 2 zeigt eine Ausführungsform einer erfindungsgemäßen Überwachungsvorrichtung 20 mit vier Sensoreinheiten 210, 211, 212 und 213, welche auf der Lagefläche eines Objektes, beispielsweise auf der Bodenfläche eines Wechselbehälters oder Containers, angeordnet sein können. Durch die kreuzförmige Anordnung in einer Ebene ergibt sich eine Redundanz der Lageerkennung, wobei die in der Überwachungsvorrichtung 20 verwendeten Kugeln in Figur 2 mit der Bezugsziffer 21 und die elektrischen Kontakte nun mit den Bezugsziffern 22 und 22' gekennzeichnet sind. In einer weiteren bevorzugten Ausführungsform können diese Neigungswinkelschalter 20 auch in verschiedenen Ebenen zueinander, beispielsweise in verschiedenen Raumwinkeln gestuft angeordnet werden. Zudem kann durch die Anordnung mehrerer Neigungswinkelschalter 20 erreicht werden, dass die Genauigkeit oder die Redundanz der Lageerkennung erhöht wird. Um verschiedenen Anforderungen wie beispielsweise einer höheren oder geringeren Empfindlichkeit gerecht zu werden, kann die Vorrichtung auch mit einer nahezu beliebigen Anzahl von Neigungswinkelschaltern bestückt werden. Für eine bevorzugte Ausführungsform, wie beispielsweise die Überwachung von einem Lastaufnahmemittel mit einem Hebekran, lassen sich zusätzliche Neigungswinkelschalter beispielsweise so positionieren, dass sie sowohl in vertikaler als auch in horizontaler Richtung ansprechen.

In einer bevorzugten Ausführungsform nach Figur 2 wird bei einer Bewegung des zu detektieren Gegenstands oder nur einer Erschütterung dieses Objektes die Lage von einer der vier Kugeln 21 geändert, wodurch mindestens ein elektrischer Kontakt 22 geschlossen bzw. unterbrochen wird. Jedoch ist in der Ausführungsform nach Figur 2 nicht gewährleistet, dass alle Neigungswinkelschalter gleichzeitig offen sind. Steht beispielsweise der Wechselbehälter oder Container schräg bei einem Lagerplatz, sind möglicherweise ein oder mehrere Schalter dauerhaft geschlossen. Es ist deswegen nicht hinreichend, lediglich den Schalterstellungen binäre Zustände zuzuweisen und über eine einfache ODER-Verknüpfung zu detektieren, ob durch Schließen eines Neigungswinkelschalters der Wechselbehälter bewegt wurde. Dadurch wäre es beispielsweise nicht möglich zu unterscheiden, ob der Behälter einfach angestoßen wurde oder ob der Behälter geschüttelt wird, was beispielsweise beim Transport der Fall ist. In einer bevorzugten Ausführungsform generiert die Schaltung daher ein Ausgangssignal, sobald mindestens einer der Schalter aufgrund einer Erschütterung seinen Status gewechselt hat.

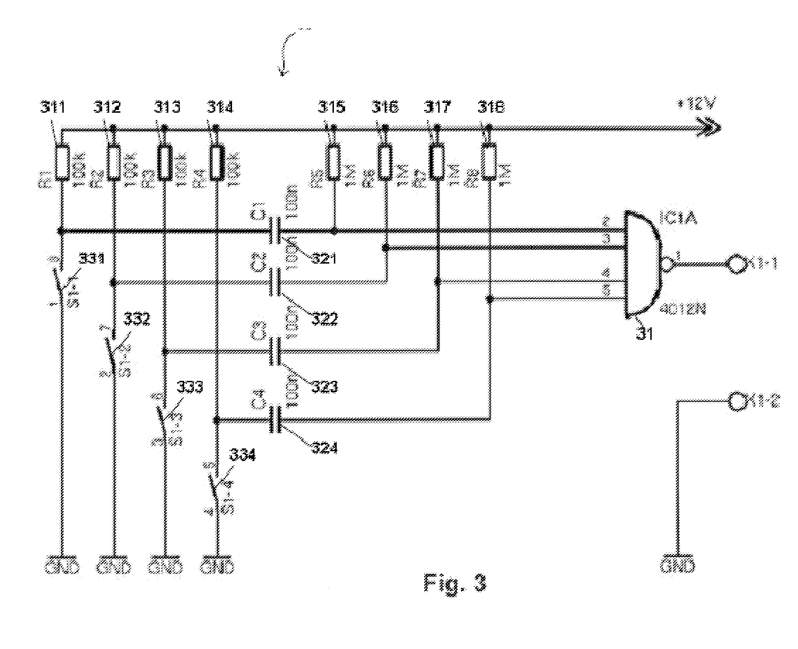

Bezugnehmend auf Figur 3 wird schematisch ein Ausführungsbeispiel einer Schaltung zur Durchführung der vorliegenden Erfindung dargestellt, wobei die Überwachungsvorrichtung insgesamt mit der Bezugsziffer 30 gekennzeichnet ist. In der Zeichnung ist die integrierte Schaltung IC1A ein CMOS NAND-Gatter 31. Diese Schaltung zeichnet sich dadurch aus, dass am Ausgang des Gatters die Spannung auf 0 Volt absinkt, wenn alle vier Eingänge des Gatters auf Betriebsspannung, hier beispielsweise 12 Volt, liegen.

Die Betriebsspannung wird durch die Widerstände R5 314 bis R8 318 dem Gatter zugeführt. Wird von dem einen der vier Eingänge des Gatters die Eingangsspannung auf 0 Volt abgesenkt, wechselt der Ausgangszustand des NAND-Gatters 31 auf eine positive Betriebsspannung.

Wird nun durch eine Bewegung mindestens einer der Schalter S1 331 bis S4 334 geschlossen, werden die damit in Reihe geschalteten Kondensatoren auf Massepotential gelegt und dadurch geladen. Kurzzeitig beträgt die Spannung über den jeweiligen Kondensator 321 bis 324 0 Volt. Dadurch wird auch am Eingang des NAND-Gatters 31 eine Spannung von 0 Volt anliegen. Wird aufgrund einer einmaligen Bewegung dieser Zustand beibehalten, lädt sich der jeweilige Kondensator C1 321 bis C4 324 über einen der jeweiligen Widerstände R5 315 bis R8 318 langsam wieder auf. Sobald die Spannung einen Sollwert überschreitet, schaltet das NAND-Gatter 31 wieder in seinen ursprünglichen Zustand zurück, und die Spannung am Ausgang des NAND-Gatters 31 sinkt wieder auf 0 Volt ab. Ändert sich dieser Zustand jedoch mehrfach, beispielsweise dadurch, dass die Bewegungssensorvorrichtung 30 geschüttelt wird, wird mindestens ein Kondensator 321 bis 324 weiter durch das Öffnen und Schließen eines Kontaktes entladen, wodurch auch der Ausgang des NAND-Gatters 31 auf eine positive Spannung geschaltet wird. Wird also ein Neigungswinkelschalter 331 bis 334 andauernd geschlossen, führt dieses nicht zu einem ständigen Ansprechen des NAND-Gatters 31. Das NAND-Gatter 31 weist erst dann eine positive Ausgangsspannung auf, wenn einer der Schalter abwechselnd geöffnet und geschlossen wird, so dass der zugehörige Kondensator C1 321 bis C4 324, beispielsweise C1 321, über den Widerstand R1 311 entladen wird.

Eine weitere Ausführungsform der Erfindung sieht den Einsatz von Halbleiterbeschleunigungssensoren vor, welche als Stand-alone-Module mit einem angepassten Mikroprozessor und einem Sollwerteinsteller und einem Schaltausgang bzw. mehreren Schaltausgängen in einem kompakten Gehäuse vorgesehen sein können.

Eine bevorzugte Ausführungsform der vorliegenden Erfindung sieht vor, ebenfalls die Neigungswinkelschalter mitsamt der Kondensatoren und Widerstände und des NAND-Gatters in einem kompakten Gehäuse zu vereinen, so dass diese als Module an Frachtcontainern, Wechselbehältern, Waren oder Fahrzeugen etc. angeordnet werden können.

Ferner sieht die vorliegende Erfindung auch eine Kombination aus einem zweidimensionalen und drei-dimensionalen Halbleiter-Beschleunigungssensor mit einer auf einem geringen Stromverbrauch optimierten Mikroprozessorsteuerung vor. Die Steuerung ermittelt zyklisch das Vorliegen einer Beschleunigung in einer der zwei oder drei Ebenen und vergleicht das Beschleunigungssignal mit einem frei einstellbaren Sollwert für die jeweilige Bewegungsebene. Bei einem Überschreiten oder Unterschreiten eines Sollwerts wird ein Zustand ausgegeben, was entweder über einen Schaltausgang oder als Signal erfolgt. Dabei lässt sich die Abfragehäufigkeit derartig einstellen, dass der Eigenstromverbrauch der Schaltung an den jeweiligen Einsatzzweck angepasst ist.

Vorzugsweise wird die erfindungsgemäße Vorrichtung zur Überwachung der Bewegung eines Gegenstands in Verbindung mit einer Telematikeinheit eingesetzt, welche ebenfalls in Verbindung mit dem Gegenstand steht. Um den Stromverbrauch der Telematikeinheit zu reduzieren, wird die erfindungsgemäße Vorrichtung dazu genutzt, eine Bewegung des zu überwachenden Gegenstands zu erkennen und die Telematikeinheit nur in Abhängigkeit von dieser Bewegung eines Gegenstands zu aktivieren. Zusätzlich kann die Telematikeinheit automatisch in vorgegebenen Zeitintervallen aktiviert werden. Steht ein zu überwachender Container mit einer Telematikeinheit beispielsweise längere Zeit auf einem Stellplatz, wird die Telematikeinheit nur in vorgegebenen Zeitintervallen aktiviert, die Position des Containers bestimmt und gegebenenfalls Daten an eine Zentrale übermittelt. Zusätzlich oder stattdessen kann die Telematikeinheit aktiviert werden, sobald mit der erfindungsgemäßen Vorrichtung eine Bewegung des Containers erkannt wurde. Dabei kann unterschieden werden zwischen einmaligen, kurzen Stößen, die gegebenenfalls keine Aktivierung auslösen sollen, während eine dauerhafte Bewegung des Containers eine Aktivierung auslöst, da dies auf eine relevante Positionsänderung des Containers hinweist. Die Signale der Vorrichtung können somit beliebig ausgewertet, interpretiert und verwendet werden.

Die vorliegende Erfindung wurde anhand von bevorzugten Beispielen dargestellt, dem Fachmann können beim Lesen der Beschreibung und der Ansprüche oder beim Betrachten der Zeichnungen jedoch weitere Ausführungsbeispiele in den Sinn kommen, die ebenso durch den Schutzbereich der vorliegenden Ansprüche abgedeckt sind.

Der Begriff "umfassend" bezeichnet eine nicht abschließende Aufzählung, und der unbestimmte Artikel "ein, einer, eines" schließt nicht eine Mehrzahl des bezeichneten Begriffs aus. Die Tatsache, dass einzelne Merkmale in unterschiedlichen Unteransprüchen genannt werden, schließt nicht aus dass diese nicht auch in Kombination miteinander vorteilhaft eingesetzt werden können. Bezugszeichen in den Ansprüchen dienen nicht dazu den Gegenstand der Erfindung zu beschränken.

### Bezugszeichenliste:

- 10: Neigungswinkelschalter
- 11: Kugel
- 12: Kunststoffgehäuse
- 13,13': Kontakt
- 14: Lage Kugel im Zustand des offenen Kontakts

- 20: Überwachungsvorrichtung, Bewegungssensorvorrichtung
- 21: Kugel
- 22,22': Kontakt
- 23: Auswerteelektronik
- 210, 211, 212, 213: Sensoreinheit

- 30: Überwachungsvorrichtung, Bewegungssensorvorrichtung
- 31: NAND-Gatter
- 311: Widerstand R1
- 312: Widerstand R2
- 313: Widerstand R3
- 314: Widerstand R4
- 315: Widerstand R5
- 316: Widerstand R6
- 317: Widerstand R7
- 318: Widerstand R8
- 321: Kondensator C1
- 322: Kondensator C2
- 323: Kondensator C3
- 324: Kondensator C4
- 331: Neigungswinkelschalter S1
- 332: Neigungswinkelschalter S2
- 333: Neigungswinkelschalter S3
- 334: Neigungswinkelschalter S4

## Patentansprüche

1. Vorrichtung zur Überwachung der Bewegung eines Gegenstands, umfassend eine Anordnung von mindestens drei kreisförmig angeordneten Sensoreinheiten (210, 211, 212, 213) in Verbindung mit einer Auswerteelektronik (23), wobei die Sensoreinheiten (210, 211, 212, 213) jeweils Erfassungsmittel zur Erfassung der Bewegung des Gegenstands und Mittel zur Weiterleitung eines Signals an die Auswerteelektronik (23) aufweisen, und die Auswerteelektronik (23) Ausgabemittel zum Ausgeben eines ersten und zweiten Signals aufweist.

2. Vorrichtung nach Anspruch 1, wobei die Anordnung vier kreisförmig angeordnete Sensoreinheiten (210, 211, 212, 213) umfasst, und jeweils zwei gegenüber liegende Sensoreinheiten (210, 211, 212, 213) für eine Bewegungsrichtung oder Bewegungsebene vorgesehen sind.

3. Vorrichtung nach einem der Ansprüche 1 und 2, wobei die Anordnung von kreisförmig angeordneten Sensoreinheiten (210, 211, 212, 213) und die Auswerteelektronik (23) in einem Gehäuse vereint sind, das an dem zu überwachenden Gegenstand anbringbar ist.

4. Vorrichtung nach einem der Ansprüche 1 bis 3, wobei die Sensoreinheiten (210, 211, 212, 213) einen Neigungswinkelschalter und/oder einen Halbleiter-Beschleunigungssensor einschließen.

5. Vorrichtung nach einem der Ansprüche 1 bis 4, wobei die Auswerteelektronik (23) wenigstens einen Kondensator aufweist, der Übertragungsmittel zur Weiterleitung eines Signals an ein NAND Gatter (31) aufweist, welches durch das Kondensatorsignal schaltbar ist.

6. Vorrichtung nach einem der Ansprüche 1 bis 5, wobei die Vorrichtung an einem Wechselbehälter, Container oder Fahrzeug angebracht ist und in Verbindung mit einer Telematikeinheit steht.

7. Vorrichtung nach Anspruch 6, wobei die Vorrichtung Mittel zur Aktivierung der Telematikeinheit in Abhängigkeit von dem ersten und zweiten Signal der Auswerteelektronik (23) aufweist.

8. Vorrichtung nach Anspruch 6, wobei die Telematikeinheit zusätzlich Mittel zur Aktivierung der Telematikeinheit in vorgegebenen Zeitintervallen aufweist.

9. Verfahren zur Überwachung der Bewegung eines Gegenstands mittels einer Vorrichtung nach einem der Ansprüche 1 bis 8, wobei die Erfassungsmittel der wenigstens drei kreisförmig angeordneten Sensoreinheiten (210, 211, 212, 213) der Vorrichtung bei Bewegung des Gegenstands ein Signal generieren und/oder einen Kontakt schließen, und die Auswerteelektronik (23) dieses Signal und/oder das Schließen eines Kontakts innerhalb einer Zeitperiode auswertet und daraufhin ein erstes und zweites Signal ausgibt.

10. Verfahren zur Überwachung der Bewegung eines Gegenstands nach Anspruch 9, wobei die Erfassungsmittel der Sensoreinheiten (210, 211, 212, 213) die Bewegung des zu überwachenden Gegenstands in eine Richtung oder in einer Ebene und/oder die Rotation um eine Achse erfassen.

11. Verfahren zur Überwachung der Bewegung eines Gegenstands nach einem der Ansprüche 9 und 10, wobei bei einer einfachen Erschütterung innerhalb einer Zeitperiode der Kondensator der Vorrichtung einmalig entladen wird und bei mehrfacher Erschütterung innerhalb einer Zeitperiode der Kondensator der Vorrichtung mehrmalig entladen wird, wobei ein NAND-Gatter (31) das einmalige und mehrmalige Laden mittels einer Entscheidungsschwelle durch Abtastung erkennt, und ein erstes Signal zur Erkennung eines Ruhezustands und ein zweites Signal zur Erkennung eines Bewegungszustandes ausgibt.

12. Verfahren zur Überwachung der Bewegung eines Gegenstands nach Anspruch 11, wobei die Auswerteelektronik (23) bei der einfachen Erschütterung innerhalb einer Zeitperiode ein erstes Signal zur Erkennung eines Ruhezustands und bei mehrfacher Erschütterung innerhalb einer Zeitperiode ein zweites Signal zur Erkennung eines Bewegungszustandes ausgibt.

13. Verfahren nach einem der Ansprüche 9 bis 12, wobei die Vorrichtung zur Überwachung der Bewegung eines Gegenstands an einem Wechselbehälter, Container oder Fahrzeug angebracht und mit einer Telematikeinheit verbunden wird, und die Telematikeinheit in Abhängigkeit von dem ersten und zweiten Signal der Auswerteelektronik (23) aktiviert wird.

14. Verfahren nach Anspruch 13, wobei die Telematikeinheit zusätzlich in vorgegebenen Zeitintervallen aktiviert wird.
